**Europäisches Patentamt**

**European Patent Office**

**Office européen des brevets**

(19)

(11) Numéro de publication : **0 435 759 B1**

(12) **FASCICULE DE BREVET EUROPEEN**

(45) Date de publication du fascicule du brevet :
15.07.92 Bulletin 92/29

(51) Int. Cl.⁵ : **A01M 7/00**

(21) Numéro de dépôt : **90403718.1**

(22) Date de dépôt : **20.12.90**

(54) **Appareillage pour envoyer un produit de traitement sur des arbres ou arbustes.**

(30) Priorité : **28.12.89 FR 8917366**

(43) Date de publication de la demande :
**03.07.91 Bulletin 91/27**

(45) Mention de la délivrance du brevet :
**15.07.92 Bulletin 92/29**

(84) Etats contractants désignés :
**DE ES FR IT**

(56) Documents cités :
**DE-A- 3 316 128**
**DE-C- 832 219**
**GB-A- 844 868**
**GB-A- 914 011**

(73) Titulaire : **NICOLAS PULVERISATEURS**
**Z.I. Laville**
**F-47240 Bon Encontre (FR)**

(72) Inventeur : **Ballu, Patrick Jean-Marie**
**4 rue du Général Baratier**
**F-51100 Reims (FR)**

(74) Mandataire : **Colas, Jean-Pierre et al**
**Cabinet de Boisse 37, avenue Franklin D.**
**Roosevelt**
**F-75008 Paris (FR)**

## Description

La présente invention est relative à un appareillage pour envoyer un produit de traitement sur des arbres ou des arbustes, notamment cultivés en ligne.

On connaît, et on utilise couramment, une grande variété de dispositifs du genre indiqué. Ils comprennent, de façon fréquente, un châssis pourvu de moyens d'attelage à l'arrière d'un tracteur, ce châssis étant équipé en général de deux roues, un réservoir de produit monté sur le châssis, une turbine capable de créer un écoulement d'air, cette turbine étant portée par le châssis, des moyens de guidage de l'écoulement d'air, capables de diriger l'écoulement d'air sortant de la turbine vers les végétaux qu'on désire traiter, et des moyens pour envoyer le produit, sous forme pulvérisée, dans l'écoulement d'air qui sort de ces moyens de guidage.

Diverses dispositions sont proposées: on peut prévoir, par exemple, que la turbine, avec les moyens de guidage de l'écoulement d'air, est située à l'arrière du dispositif avec son axe de rotation horizontal, le plus souvent longitudinal, rarement transversal.

Dans d'autres dispositions, on place la turbine, à axe horizontal longitudinal, à l'avant du dispositif, c'est-à-dire à proximité du système d'attelage, les sorties d'air étant placées soit à l'avant du châssis, soit à l'arrière, et étant alors reliées à la turbine par des conduits passant sous le réservoir ou au travers de celui-ci.

Ces dispositions connues présentent toutes l'inconvénient que la transmission, depuis la prise de force du tracteur, s'accommode mal des tournants très serrés, tels que ceux qui sont imposés à l'ensemble tracteur-remorque à l'extrémité d'une ligne de végétation, où il est nécessaire de tourner de 180° presque sur place.

On avait également proposé, dans GB-A-914 011 de placer la soufflerie sur une pièce intermédiaire montée sur le tracteur par un attelage trois joints, ce qui permet de régler sa hauteur, et la remorque est attelée à cette pièce intermédiaire par une articulation à axe vertical.

Cette disposition résout le problème de la transmission entre la prise de force du tracteur et la soufflerie, par le fait que la position relative de la soufflerie par rapport au tracteur ne varie pas lors des virages. En revanche le point d'articulation de la remorque est déplacé considérablement vers l'arrière par rapport au tracteur, et il subit des déplacements verticaux importants en réponse aux irrégularités du terrain. Cela peut aller jusqu'à un choc entre ce point d'articulation et le sol. En outre, l'orientation de la soufflerie par rapport à un plan transversal à la marche varie constamment en fonction des mouvements du seul tracteur, d'où des irrégularités dans l'envoi du produit de traitement.

La présente invention a pour but de remédier à ces inconvénients, et de procurer une disposition assurant une plus grande sécurité et une meilleur répartition du produit de traitement.

Pour obtenir ce résultat, l'invention fournit un appareillage pour envoyer un produit de traitement sur des arbres ou arbustes, comportant une soufflerie capable de créer un courant d'air dirigé sur les arbres ou arbustes, des moyens pour pulvériser le produit de traitement dans ledit courant d'air, ces moyens comprenant des buses placées sur le trajet de courant d'air, une pompe, un réservoir pour le produit de traitement et des conduits reliant la pompe au réservoir et aux buses, l'appareillage comprenant en outre une remorque à deux roues qui porte le réservoir et qui peut être attelée à un tracteur grâce à une pièce intermédiaire, qui est reliée au tracteur par une articulation à axe horizontal, transversal au sens de la marche du tracteur, qui est reliée à la remorque par une articulation à axe vertical, et qui porte la soufflerie, et des moyens pour entraîner la soufflerie et la pompe à partir d'une source d'énergie qui peut être une prise de force du tracteur, caractérisé en ce que ladite pièce intermédiaire peut osciller librement autour de ladite articulation à axe horizontal pendant la marche du tracteur.

Ainsi, lors d'un tournant, la position de la soufflerie par rapport au tracteur ne varie pas, car la remorque pivote par rapport à un axe vertical placé entre la pièce intermédiaire et la remorque. Supposons que les roues arrières du tracteur s'abaissent, par exemple au passage d'un fossé, c'est alors l'articulation à axe horizontal qui va pivoter. Comme cette articulation est à proximité des roues arrière du tracteur, le risque d'un contact avec le sol est pratiquement supprimé. Par ailleurs, la pièce intermédiaire va être solidaire de la remorque au cours de pivotement autour de l'axe horizontal, et ce pivotement sera d'une amplitude réduite à cause de la distance relativement importante qui existe entre cet axe horizontal et l'essieu de la remorque. La répartition du produit de traitement sera donc améliorée par rapport à l'art antérieur cité plus haut.

Suivant un mode de réalisation intéressant, la soufflerie comprend un ventilateur de type hélicoïde, à axe parallèle à la direction de marche et à aspiration tournée vers l'avant, et la soufflerie comprend un déflecteur qui dévie sur les côtés, en direction des arbres ou arbustes à traiter, le courant d'air refoulé par le ventilateur et chargé du produit de traitement.

Avantageusement, alors, le déflecteur et la partie avant du réservoir ont des formes arrondies adaptées pour qu'il reste un faible espace entre le déflecteur et ladite partie avant lorsque la remorque pivote par rapport à la partie intermédiaire.

Avantageusement, aussi, la pièce intermédiaire porte un capotage situé en avant de la soufflerie et qui fait parvenir à l'aspiration du ventilateur de l'air prélevé latéralement ou à l'arrière de la soufflerie.

L'avantage du capotage en avant de la soufflerie est de filtrer l'air ( feuilles ... ) et éventuellement de soustraire le conducteur du tracteur au courant d'air produit par l'aspiration, et surtout au bruit qui peut être développé par celle-ci. On peut d'ailleurs prévoir que le capot est insonorisé. Les formes adaptées du déflecteur et du réservoir permettent d'utiliser la place au mieux et donc de réduire la longueur de l'appareillage. En outre, elles permettent de reporter une plus grande partie du poids du réservoir sur la pièce intermédiaire et, de là, sur les roues motrices du tracteur.

Suivant un autre mode de réalisation, la soufflerie comprend un ventilateur de type hélicoïde, à axe parallèle au sens de marche, et à aspiration dirigée vers l'arrière, et la pièce intermédiaire porte un déflecteur situé à l'avant du ventilateur et dirigeant le courant d'air vers les côtés et/ou vers le haut.

Avantageusement, dans ce cas, la pièce intermédiaire porte un capotage disposé pour assurer le guidage de l'air d'admission qui s'écoule entre la face arrière de ce capotage et la surface avant de la cuve.

Suivant encore un autre mode de réalisation, la soufflerie comprend un ventilateur de type centrifuge et le courant d'air produit est dirigé par des manches à air vers des diffuseurs situés à proximité de la végétation à traiter.

L'invention va maintenant être exposée de façon plus détaillée à l'aide d'exemples pratiques, illustrés avec les dessins, parmi lesquels :

Figure 1 est une vue en plan d'un appareillage selon l'invention, la soufflerie et la pompe étant supposées enlevées.

Figure 2 est une vue en élévation et coupe partielle selon la ligne II-II de la figure 3 du même dispositif.

Figure 3 est une vue on plan et coupe partielle suivant la ligne III-III de la figure 2 du même dispositif.

Figure 4 est une vue en élévation, le tracteur étant supposé enlevé.

Figures 5 et 6 sont des coupes verticales partielles illustrant des variantes de la réalialisation des figures 1 à 4.

Les figures montrent une remorque 1, à deux roues, susceptible d'être attelée à un tracteur 2. Le châssis de la remorque comporte un ensemble 3 qui porte à l'arrière les axes des roues de la remorque, et à l'avant un pivot 4 axe vertical. Sur le pivot 4 est articulée une pièce intermédiaire 5, en forme d'étoile à trois branches, une des branches étant dirigée vers l'arrière portant les moyens de liaison avec l'articulation à axe vertical 4, et les deux branches dirigées vers l'avant portant les moyens de liaison avec deux articulations à axe horizontal 6, qui se raccordent aux bras horizontaux 7 ou à deux trous différents de la barre de liaison à deux bras inférieurs d'un attelage trois points, de type classique, porté par le tracteur. Les deux liaisons 6, ou la barre de liaison des deux bras inférieurs, constituent par conséquent une articulation à axe horizontal, transversal à la marche. L'articulation à axe vertical 4 de préférence se trouve à peu près à égale distance des axes de l'essieu des roues de la remorque et de l'essieu des roues arrières 8 du tracteur.

Enfin, pour permettre à l 'essieu arrière du tracteur et à celui de la remorque de s'adapter à des terrains irréguliers en évoluant dans des plans différents sans risque de retournement en virage, la branche arrière de la pièce intermédiaire 5 comporte une articulation longitudinale 4A à débattement limité, inférieur à ± 30°.

Le châssis 3 de la remorque porte une cuve 9 pour un produit de traitement liquide.

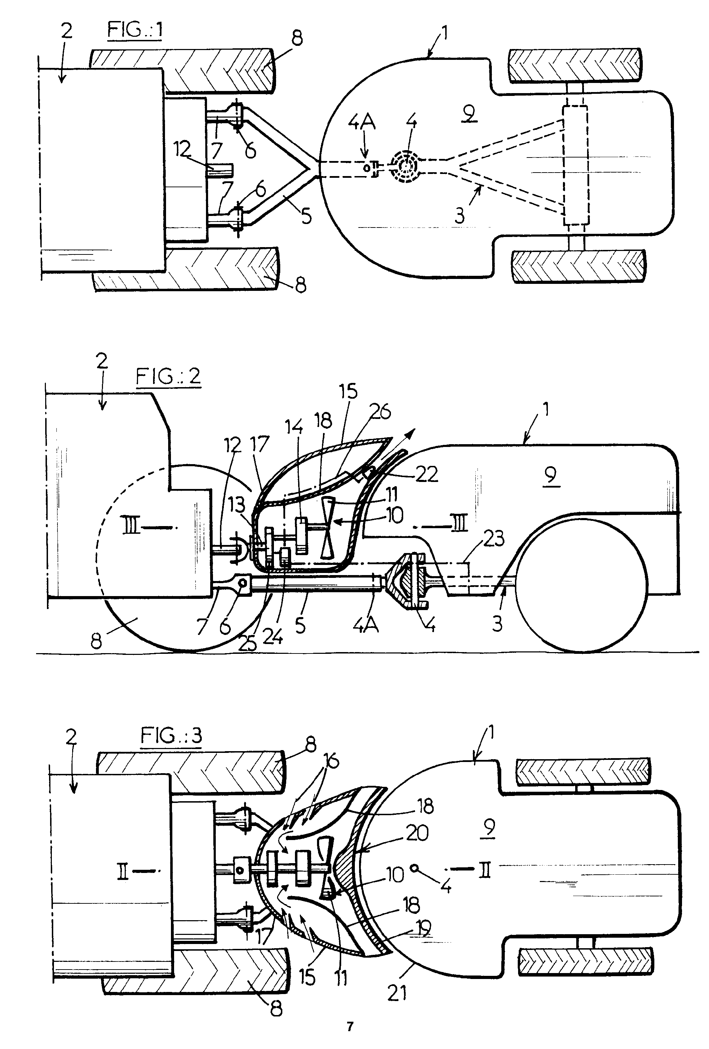

La pièce intermédiaire 5 porte une soufflerie qui comprend, dans l'exemple décrit aux figures 1 à 4, un ventilateur 11, de type hélicoïde, à axe horizontal parallèle au sens de marche, disposé pour souffler de l'air de l'avant vers l'arrière. Le ventilateur 11 est entraîné par la prise de force arrière du tracteur 12, par l'intermédiaire d'une transmission télescopique 13 qui comprend, de façon classique, un joint universel et un arbre télescopique, et d'un multiplicateur 14 à engrenages ou à courroies.

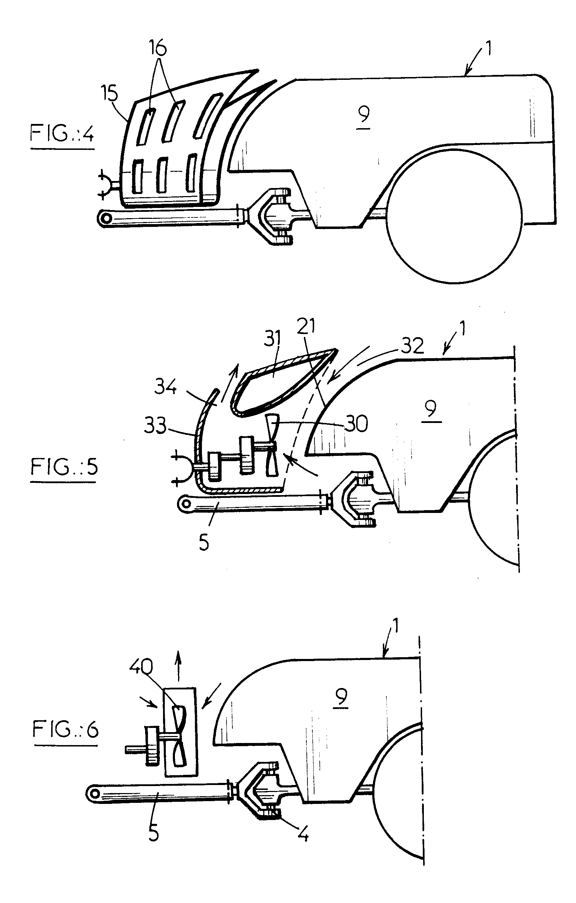

Le ventilateur est éventuellement entouré d'un capotage 15, dont la forme est bien visible aux figures 3 et 4. Ce capotage entoure le ventilateur 11 dans toutes les directions, sauf vers l'arrière. Il est pourvu d'ouïes ou de grilles 16 disposées sur les côtés ou vers l'avant et qui permettent à l'air de pénétrer à l'intérieur du capotage. Une couche de matière d'insonorisation 17 est prévue sur les parois intérieures du capotage 15. A l'intérieur de celui-ci se trouve un déflecteur 18, disposé pour diriger l'air entrant par les ouïes 16 vers l'avant, puis pour diriger l'air aspiré par le ventilateur 11 vers l'arrière, suivant un trajet qui s'élargit du côté refoulement du ventilateur 11. Un second déflecteur 19, ou déflecteur arrière, dirige le flux d'air refoulé par le ventilateur de façon à lui donner la forme de nappe oblique par rapport au sens de la marche, dirigée vers les végétaux, horizontalement ou vers le haut. La face arrière 20 du second déflecteur 19 a de préférence une forme arrondie qui correspond dans l'ensemble à celle d'un cylindre à axe vertical coaxial à l'articulation 4, cette surface 20 étant, à sa partie supérieure, en forme de fraction de sphère centrée également sur l'articulation 4. La face avant 21 de la cuve 9 a de préférence une forme sensiblement identique, et se trouve si possible à faible distance de cette surface 20. Il en résulte que, lors des tournants, les deux surfaces restent à très faible distance l'une de l'autre, sans se toucher, et lorsque des irrégularités du terrain amènent des déplacements relatifs correspondant au jeu inévitable de l'articulation 4, il n'en résulte pas non plus de contact entre la cuve et le déflecteur 19.

La forme des déflecteurs 18 et 19 conduit à des écoulements d'air obliques par rapport au sens de la marche, ce qui a pour avantage d'agiter les feuilles, et conduit à une meilleure pénétration et donc efficacité du traitement.

Au voisinage de la sortie du passage d'air entre les déflecteurs 18 et 19 sont disposés, de façon connue, des ajutages 22 destinés à pulvériser du produit de traitement extrait de la cuve 9. Pour cela, une canalisation d'aspiration 23, en partie flexible, plonge dans la cuve, et est reliée à une pompe 24. Celle-ci est entraînée par la prise de force 12 du tracteur par l'intermédiaire d'un renvoi réducteur 25. Le refoulement de la pompe 24 parvient aux ajutages 22 par l'intermédiaire de canalisations fixes 26. En variante, la pompe est portée par le tracteur.

La figure 5 montre une variante de l'appareillage de la figure 1. Le ventilateur 30, toujours hélicoïde, placé avec son axe parallèle au sens de la marche sur la pièce intermédiaire 5, est disposé de façon à souffler de l'arrière vers l'avant. Le capotage 31 est disposé pour assurer le guidage de l'air d'admission, qui s'écoule par l'intervalle 32 entre la partie arrière de ce capotage et la surface avant 21 de la cuve 9. Le capotage 31, par sa face avant qui porte une couche de matière d'isolation phonique 33, est disposé pour projeter le courant d'air produit par le ventilateur vers le côté et vers le haut, grâce à des orifices 34 convenablement dirigés.

La figure 6 montre une autre variante du dispositif. Le ventilateur 40 est cette fois du type centrifuge, son axe est encore dirigé parallèlement au sens de marche. Il met en pression un courant d'air qui nst ensuite guidé par des manches à air vers des diffuseurs situés à proximité de la végétation à traiter. Son admission peut se faire par l'avant et/ou par l'arrière. Le ventilateur centrifuge peut également être disposé avec son axe vertical, ou horizontal et perpendiculaire au sens de marche, son admission étant alors faite par le dessus, ou le dessous, ou latérale.

Dans les exemples ci-deseus, la pièce intermédiaire 5 est en forme d'étoile à trois branches avec deux branches dirigées vers l'avant partant des moyens de liaison avec deux articulations à axe horizontal 6. Cette forme n'est pas obligatoire. On peut, par exemple constituer la pièce intermédiaire avec un bras central dirigé vers l'avant et venant s'articuler sur le milieu de la barre de liaison des deux bras inférieures d'un attelage trois points porté par le tracteur, ou bien sur le piton d'attelage du tracteur lui-même, à condition de prévoir en outre au moins une barre rigide reliant la pièce intermédiaire à un point de la barre de liaison ou du tracteur situé sur la même ligne horizontale transversale que le point d'articulation de la pièce intermédiaire. On peut également prévoir deux tirants souples, tels que des chaines, reliant la pièce intermédiaire à deux points de la barre de liaison ou du tracteur situés sur la même ligne horizontale transversale que le point d'articulation de la pièce

intermédiaire, et de part et d'autre de ce point. Il est clair qu'on constitue ainsi une articulation à axe horizontal transversal entre le tracteur et la pièce intermédiaire. L'emploi du piton d'attelage, en particulier, est avantageux parce que ce piton d'attelage est normalement situé à très faible distance en arrière de l'essieu arrière du tracteur ce qui diminue le porte à faux du point de report de la charge sur le tracteur.

**Revendications**

1. Appareillage pour envoyer un produit de traitement sur des arbres ou arbustes, comportant une soufflerie (10) capable de créer un courant d'air dirigé sur les arbres ou arbustes, des moyens pour pulvériser le produit de traitement dans ledit courant d'air, ces moyens comprenant des buses (22) placées sur le trajet de courant d'air, une pompe (24), un réservoir (9) pour le produit de traitement et des conduits reliant la pompe au réservoir (9) et aux buses (22) , l'appareillage comprenant en outre une remorque (1) à deux roues qui porte le réservoir (9) et qui peut être attelée à un tracteur (2) grâce à une pièce intermédiaire (5), qui est reliée au tracteur (2) par une articulation (6) à axe horizontal, transversal au sens de la marche du tracteur (2), qui est reliée à la remorque (1) par une articulation (4) à axe vertical, et qui porte la soufflerie (10), et des moyens (13, 14) pour entraîner la soufflerie (10) et la pompe (24) à partir d'une source d'énergie qui peut être une prise de force (12) du tracteur (2), caractérisé en ce que ladite pièce intermédiaire (5) peut osciller librement autour de ladite articulation (6) à axe horizontal pendant la marche du tracteur (2).

2. Appareillage selon la revendication 1 dans lequel la soufflerie (10) comprend un ventilateur de type hélicoïde (11), à axe parallèle à la direction de marche et à aspiration tournée vers l'avant, caractérisé en ce que la soufflerie (10) comprend un déflecteur (20) qui dévie sur les côtés, en direction des arbres ou arbustes à traiter, le courant d'air refoulé par le ventilateur (11) et chargé du produit de traitement.

3. Appareillage selon la revendication 2, caractérisé en ce que le déflecteur (20) et la partie avant du réservoir (9) ont des formes arrondies adaptées pour qu'il reste un faible espace entre le déflecteur (20) et ladite partie avant lorsque la remorque (1) pivote par rapport à la partie intermédiaire.

4. Appareillage selon la revendication 2 ou 3, caractérisé en ce que la pièce intermédiaire (5) porte un capotage (15) situé en avant de la soufflerie (10) et qui fait parvenir à l'aspiration du ventilateur (11) de l'air prélevé latéralement ou à l'arrière de la soufflerie (10).

5. Appareillage selon la revendication 1, caractérisé en ce que la soufflerie (10) comprend un ventilateur de type hélicoïde (30), à axe parallèle au sens de marche, et à aspiration dirigée vers l'arrière, et en ce que la pièce intermédiaire (5) porte un déflecteur (33) situé à l'avant du ventilateur (30) et dirigeant le courant d'air vers les côtés et/ou vers le haut.

6. Appareillage selon la revendication 5, caractérisé en ce que la pièce intermédiaire (5) porte un capotage (31) disposé pour assurer le guidage de l'air d'admission qui s'écoule entre la face arrière de ce capotage (31) et la surface avant (21) de la cuve (9).

7. Appareillage selon la revendication 1, dans lequel la soufflerie comprend un ventilateur de type centrifuge (40), caractérisé en ce que le courant d'air produit est dirigé par des manches à air vers des diffuseurs situés à proximité de la végétation à traiter.

8. Appareillage selon l'une des revendications 4 ou 6, caractérisé en ce qu'il est prévu une couche de matière d'insonorisation (17) sur les parois intérieures des capotages (15,31).

**Patentansprüche**

1. Vorrichtung zum Aufbringen eines Behandlungsmittels auf Bäume oder Sträucher, die ein Gebläse (10) zum Erzeugen eines auf die Bäume oder Sträucher gerichteten Luftstroms, Mittel zum Zerstäuben des Behandlungsmittels in dem Luftstrom aufweist, wobei diese Mittel im Weg des Luftstroms angeordnete Düsen (22), eine Pumpe (24), einen Behälter (9) für das Behandlungsmittel und die Pumpe mit dem Behälter (9) und den Düsen (22) verbindende Leitungen umfassen, wobei ferner die Vorrichtung einen Anhänger (1) mit zwei Rädern aufweist, der den Behälter (9) trägt und der mit einer Zugmaschine (2) kuppelbar ist mit Hilfe eines Zwischenstücks (5), das mit der Zugmaschine (2) durch ein Gelenk (6) mit horizontaler, quer zur Fahrtrichtung der Zugmaschine verlaufender Achse verbunden ist, das mit dem Anhänger (1) durch ein Gelenk (4) mit vertikaler Achse verbunden ist und das das Gebläse (10) und Mittel (13,14) zum Antrieb des Gebläses (10) und der Pumpe (24) von einer Energiequelle her trägt, die eine Antriebswelle (12) der Zugmaschine (2) sein kann, dadurch gekennzeichnet, daß das genannte Zwischenstück (5) um das genannte Gelenk (6) mit horizontaler Achse, während der Fahrt der Zugmaschine (2) frei schwingen kann.

2. Vorrichtung nach dem Anspruch 1, bei der das Gebläse (10) einen Axialventilator (11) mit einer Achse parallel zur Fahrtrichtung und mit nach vorn gerichteter Ansaugung aufweist, dadurch gekennzeichnet, daß das Gebläse (10) einen Abweiser (20) aufweist, der den durch den Ventilator (11) geförderten ünd mit dem Behandlungsmittel beaufschlagten Luftstrom seitlich in Richtung auf die zu behandelnden Bäume oder Sträucher ablenkt.

3. Vorrichtung nach dem Anspruch 2, dadurch gekennzeichnet, daß der Abweiser (20) und der vordere Abschnitt des Behälters (9) abgerundete Formen aufweisen, derart daß ein kleiner Zwischenraum zwischen dem Abweiser (20) und dem genannten vorderen Abschnitt verbleibt, während der Anhänger (1) in Bezug auf das Zwischenstück schwenkt.

4. Vorrichtung nach dem Anspruch 2 oder 3, dadurch gekennzeichnet, daß das Zwischenstück (5) eine Abdeckung (15) trägt, die vor dem Gebläse (10) angeordnet ist und die zum Ansaugeinlaß des Ventilators (11) Luft gelangen läßt, die seitlich oder hinten am Gebläse (10) entnommen wird.

5. Vorrichtung nach dem Anspruch 1, dadurch gekennzeichnet, daß das Gebläse (10) einen Axialventilator (30) mit einer Achse parallel zur Fahrtrichtung aufweist und daß das Zwischenstück (5) einen Abweiser (33) trägt, der vor dem Ventilator (30) angeordnet ist und den Luftstrom nach den Seiten und/oder nach oben leitet.

6. Vorrichtung nach dem Anspruch 5, dadurch gekennzeichnet, daß das Zwischenstück (5) eine Abdeckung (31) trägt, die vorgesehen ist, um die Leitung der Eintrittsluft zu gewährleisten, die zwischen der rückwärtigen Fläche dieser Abdeckung (31) und der vorderen oberfläche (21) des Tanks (9) strömt.

7. Vorrichtung nach dem Anspruch 1, bei der das Gebläse einen Zentrifugalventilator (40) aufweist, dadurch gekennzeichnet, daß der erzeugte Luftstrom durch Lufteinsätze zu Diffusoren geleitet wird, die in der Nähe der zu behandelnden Pflanzen angeordnet sind.

8. Vorrichtung nach einem der Ansprüche 4 oder 6, dadurch gekennzeichnet, daß ein Belag aus schalldämmendem Material (17) auf den Innenwandungen der Abdeckungen (15,31) vorgesehen ist.

**Claims**

1. Apparatus for conveying a treatment product onto trees or shrubs, comprising a blower (10) capable of creating a current of air directed onto the trees or shrubs, means for spraying the treatment product into the said current of air, these means comprising nozzles (22) placed in the path of the current of air, a pump (24), a tank (9) for the treatment product and ducts connecting the pump to the tank (9) and to the nozzles (22), the apparatus also comprising a two-wheel trailer (1) which carries the tank (9) and which can be coupled to a tractor (2) by means of an intermediate component (5) which is connected to the tractor (2) by an articulation (6) with a horizontal axis transverse to the direction of advance of the tractor (2) and which is connected to the trailer (1) by an articulation (4) with a vertical axis, and which carries the blower (10) and means (13, 14) for driving the blower (10) and the pump (24) from a power source which can be a power take-off (12) of the tractor, characterised in that the said intermediate component (5) can freely oscillate about the said articulation (6) with an horizontal axis during the progression of the tractor (2).

2. Apparatus according to claim 1, wherein the blower (10) comprises a fan (11) of axial flow type, with an axis parallel to the direction of advance and with an intake turned towards the front, characterised in that the blower (10) comprises a deflector (20) which deflects the current of air delivered by the fan (11) and charged with the treatment product onto the sides in the direction of the trees or shrubs to be treated.

3. Apparatus accordint to claim 2, characterised in that the deflector (20) and the front portion of the tank (9) have rounded forms adapted so that there is a small space remaining between the deflector (20) and the said front portion when the trailer (1) pivots with respect to intermediate portion.

4. Apparatus according to claims 2 or 3, characterised in that the intermediate component (5) carries a cowling (15) located in front of the blower (10) and wich causes the air taken laterally or at the rear of the blower (10) to reach the intake of the fan (11).

5. Apparatus according to claim 1, characterised in that the blower (10) comprises a fan (30) of axial flow type, with an intake directed towards the rear, and in that the intermediate component (5) carries a deflector (33) located in front of the fan (30) and directing the current of air towards the sides and/or upwards.

6. Apparatus according to claim 5, characterised in that the intermediate component (5) carries a cowling (31) disposed in order to guide the intake air which flows between the rear face of this cowling (31) and the front surface (21) of the tank (9).

7. Apparatus according to claim 1, wherein the blower comprises a fan (40) of centrifugal type characterised in that the current of air which is producted is guided via air sleeves towards diffusers located in the vicinity of the plants to be treated.

8. Apparatus according to one of the claims 4 or 6, characterised in that a layer of sound-proofing material (17) is provided on the internal walls of the cowling (15, 31).

FIG.:1

FIG.:2

FIG.:3

FIG.:4

FIG.:5

FIG.:6